(19) Europäisches Patentamt
European Patent Office
Office européen des brevets

(11) Publication number: **0 089 795**
**B1**

(12) # EUROPEAN PATENT SPECIFICATION

(45) Date of publication of patent specification: **25.03.87**

(51) Int. Cl.$^4$: **C 10 G 71/04,** B 01 J 29/28

(21) Application number: **83301391.5**

(22) Date of filing: **14.03.83**

(54) **Process for converting olefins to high viscosity index lubricants.**

(30) Priority: **18.03.82 US 359395**

(43) Date of publication of application:
**28.09.83 Bulletin 83/39**

(45) Publication of the grant of the patent:
**25.03.87 Bulletin 87/13**

(84) Designated Contracting States:
**BE DE FR GB IT NL**

(56) References cited:
**EP-A-0 031 675**
**US-A-4 150 062**
**US-A-4 227 992**

(73) Proprietor: **MOBIL OIL CORPORATION**
**150 East 42nd Street**
**New York New York 10017 (US)**

(72) Inventor: **Garwood, William Everett**
**125 Warwick Road**
**Haddonfield New Jersey 08033 (US)**
Inventor: **Schoennagel, Hans Juergen**
**42 Pine Knoll Drive**
**Lawrencecille New Jersey 08648 (US)**

(74) Representative: **Cooper, John Anthony et al**
**Mobil Court 3 Clements Inn**
**London WC2A 2EB (GB)**

**EP 0 089 795 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a process for converting olefins to a hydrocarbon oil of low pour point, and high viscosity index suitable as a lubricating oil base stock.

The present invention provides a process for converting an olefinic stream containing light olefins having an average number of carbon atoms per molecule of 2 to 16 to a lubricating oil stock comprising:

(a) subjecting a crystalline zeolite ZSM-5 type catalyst to a preconditioning treatment by passing a light olefin or olefin mixture over the catalyst at a temperature from 204° to 538°C (400° to 1000°F), a pressure from 101 kPa to 791 kPa (0 to 100 psig) and a weight hourly space velocity of from 0.1 to 5.

(b) thereafter passing an olefin feedstock comprising olefins having an average number of carbon atoms per molecule of 2 to 16 over the treated catalyst;

(c) collecting the effluent stream therefrom;

(d) fractionating the effluent stream into a high boiling point lubricating oil fraction; and

(e) hydrogenating the lubricating oil fraction.

The conversion of ethylene to LPG and gasoline is described in a number of U.S. Patents. For example, U.S. Patent No. 4,100,218 discloses an ethane conversion process wherein ethane is converted to LPG and gasoline or aromatics concentrate in a combination process which comprises directly passing olefin effluent from the thermal cracking of ethane over a special crystalline aluminosilicate zeolite of the ZSM-5 type and recovering aromatics and $C_3$+ hydrocarbons. In U.S. Patent No. 4,150,062, olefins of 2—4 carbon atoms are converted to high octane olefinic gasoline components by contacting a light olefin feedstock with a catalyst comprising a crystalline aluminosilicate zeolite in the presence of a relatively large amount of co-fed water.

U.S. Patent No. 4,227,992 discloses a process for separating ethylene in admixture with light olefins by contacting the mixture under suitable conditions with a catalyst such as a zeolite of the ZSM-5 type so as to selectively convert the propylene and higher olefins to both gasoline and fuel oil.

In the process of this invention, a hydrocarbon stream containing primarily olefins such as ethylene up to and inclusive of $C_{16}$ olefins is contacted with a zeolite of the ZSM-5 type which has been specifically preconditioned for the process. This contacting is conducted under very specific reaction conditions so as to selectively react the olefins to produce a lubricating oil base stock.

The crystalline zeolites utilized herein are members of a class of zeolitic materials which exhibit unusual properties. Although these zeolites have unusually low alumina contents, i.e. high silica to alumina mole ratios, they are very active even when the silica to alumina mole ratio exceeds 30. The activity is surprising since catalytic activity is generally attributed to framework aluminum atoms and/or cations associated with these aluminum atoms. These zeolites retain their crystallinity for long periods in spite of the presence of steam at high temperature which induces irreversible collapse of the framework of other zeolites, e.g. of the X and A type. Furthermore, carbonaceous deposits, when formed, may be removed by burning at higher than usual temperatures to restore activity. These zeolites, used as catalyst, generally have low coke-forming activity and therefore are conducive to long times on stream between regenerations by burning carbonaceous deposits with oxygen-containing gas such as air.

An important characteristic of the crystal structure of this class of zeolites is that it provides a selective constrained access to and egress from the intracrystalline free space by virtue of having an effective pore size intermediate between the small pore Linde A and the large pore Linde X, i.e. the pore windows of the structure are of about a size such as would be provided by 10-membered rings of silicon atoms interconnected by oxygen atoms. It is to be understood, of course, that these rings are those formed by the regular disposition of the tetrahedra making up the anionic framework of the crystalline zeolite, the oxygen atoms themselves being bonded to the silicon (or aluminum, etc.) atoms at the centers of the tetrahedra.

The silica to alumina mole ratio referred to may be determined by conventional analysis. This ratio is meant to represent, as closely as possible, the ratio in the rigid anionic framework of the zeolite crystal and to exclude aluminum in the binder or in cationic or other form within the channels. Although zeolites with silica to alumina mole ratios of at least 12 are useful, it is preferred in some instances to use zeolites having substantially higher silica/alumina ratios, e.g. 1600 and above. In addition, zeolites as otherwise characterized herein but which are substantially free of aluminum, that is zeolites having silica to alumina mole ratios of up to infinity, are found to be useful and even preferable in some instances. Such "high silica" or "highly siliceous" zeolites are intended to be included within this description. Also included within this definition are substantially pure silica analogs of the useful zeolites described herein, that is to say those zeolites having no measurable amount of aluminum (silica to alumina mole ratio of infinity) but which otherwise embody the characteristics disclosed.

This class of zeolites, after activation, acquires an intracrystalline sorption capacity for normal hexene which is greater than that for water, i.e. they exhibit "hydrophobic" properties. This hydrophobic character can be used to advantage in some applications.

The class of zeolites useful herein have an effective pore size such as to freely sorb normal hexene. In addition, the structure must provide constrained access to larger molecules. It is sometimes possible to judge from a known crystal structure whether such constrained access exists. For example, if the only pore

windows in a crystal are formed by 8-membered rings of silicon and aluminum atoms, then access by molecules of larger cross-section than normal hexene is excluded and the zeolite is not of the desired type. Windows of 10-membered rings are preferred, although in some instances excessive puckering of the rings or pore blockage may render these zeolites ineffective.

Although 12-membered rings in theory would not offer sufficient constraint to produce advantageous conversions, it is noted that the puckered 12-ring structure of TMA offretite does show some constrained access. Other 12-ring structures may exist which may be operative for other reasons and, therefore, it is not the present intention to entirely judge the usefulness of a particular zeolite solely from theoretical structural considerations.

Rather than attempt to judge from crystal structure whether or not a zeolite possesses the necessary constrained access to molecules of larger cross-section than normal paraffins, a simple determination of the "Constraint Index" as herein defined may be made by passing continuously a mixture of an equal weight of normal hexane and 3-methylpentane over a sample of zeolite at atmospheric pressure according to the following procedure. A sample of the zeolite, in the form of pellets or extrudate, is crushed to a particle size about that of coarse sand and mounted in a glass tube. Prior to testing, the zeolite is treated with a stream of air at 540°C for at least 15 minutes. The zeolite is then flushed with helium and the temperature is adjusted between 290°C and 510°C to give an overall conversion of between 10% and 60%. The mixture of hydrocarbons is passed at 1 liquid hourly space velocity (i.e., 1 volume of liquid hydrocarbon per volume of zeolite per hour) over the zeolite with a helium dilution to give a helium to (total) hydrocarbon mole ratio of 4:1. After 20 minutes on stream, a sample of the effluent is taken and analyzed, most conveniently by gas chromatography, to determine the fraction remaining unchanged for each of the two hydrocarbons.

While the above experimental procedure will enable one to achieve the desired overall conversion of 10 to 60% for most zeolite samples and represents preferred conditions, it may occasionally be necessary to use somewhat more severe conditions for samples of very low activity, such as those having an exceptionally high silica to alumina mole ratio. In those instances, a temperature of up to 540°C and a liquid hourly space velocity of less than one, such as 0.1 or less, can be employed in order to achieve a minimum total conversion of about 10%.

The "Constraint Index" is calculated as follows:

$$\text{Constraint Index} = \frac{\log_{10} (\text{fraction of n-hexane remaining})}{\log_{10} (\text{fraction of 3-methylpentane remaining})}$$

The Constraint Index approximates the ratio of the cracking rate constants for the two hydrocarbons. Zeolites suitable for the present invention are those having a Constraint Index of 1 to 12. Constraint Index (CI) values for some typical materials are:

| | C.I. |
|---|---|
| ZSM-4 | 0.5 |
| ZSM-5 | 8.3 |
| ZSM-11 | 8.7 |
| ZSM-12 | 2 |
| ZSM-23 | 9.1 |
| ZSM-35 | 4.5 |
| ZSM-38 | 2 |
| ZSM-48 | 3.4 |
| TMA Offretite | 3.7 |
| Clinoptilolite | 3.4 |
| Beta | 0.6 |
| H-Zeolon (mordenite) | 0.4 |
| REY | 0.4 |
| Amorphous Silica-Alumina | 0.6 |
| Erionite | 38 |

The above-described Constraint Index is an important and even critical definition of those zeolites which are useful in the instant invention. The very nature of this parameter and the recited technique by which it is determined, however, admit of the possibility that a given zeolite can be tested under somewhat different conditions and thereby exhibit different Constraint Indices. Constraint Index seems to vary somewhat with severity of operation (conversion) and the presence or absence of binders. Likewise, other variables such as crystal size of the zeolite, the presence of occluded contaminants, etc., may affect the constraint index. Therefore, it will be appreciated that it may be possible to so select test conditions as to establish more than one value in the range of 1 to 12 for the Constraint Index of a particular zeolite. Such a zeolite exhibits the constrained access as herein defined and is to be regarded as having a Constraint Index

in the range of 1 to 12. Also contemplated herein as having a Constraint Index in the range of 1 to 12 and therefore within the scope of the defined novel class of highly siliceous zeolites are those zeolites which, when tested under two or more sets of conditions within the above-specified ranges of temperature and conversion, produce a value of the Constraint Index slightly less than 1, e.g. 0.9, or somewhat greater than 12, e.g. 14 or 15, with at least one other value within the range of 1 to 12. Thus, it should be understood that the Constraint Index value as used herein is an inclusive rather than an exclusive value. That is, a crystalline zeolite when identified by any combination of conditions within the testing definition set forth herein as having a Constraint Index in the range of 1 to 12 is intended to be included in the instant novel zeolite definition whether or not the same identical zeolite, when tested under other of the defined conditions, may give a Contraint Index value outside of the range of 1 to 12.

The class of zeolites defined herein as of the ZSM-5 type is exemplified by ZSM-5, ZSM-11, ZSM-12, ZSM-23, ZSM-35, ZSM-38, ZSM-48, and other similar materials.

ZSM-5 is described and its X-ray diffraction pattern set out in U.S. Patent No. 3,702,886 and Reissue 29,948, ZSM-11 in U.S. Patent No. 3,709,979, ZSM-12 in U.S. Patent No. 3,832,449, ZSM-23 in U.S. Patent No. 4,076,842, ZSM-35 in U.S. Patent No. 4,016,245 and ZSM-38 in U.S. Patent No. 4,046,859.

ZSM-48 can be identified, in terms of moles of anhydrous oxides per 100 moles of silica, as follows:

$$(0\text{—}15)RN : (0\text{—}1.5)M_{2/n}O : (0.2)Al_2O_3 : (100)SiO_2$$

wherein:

M is at least one cation having a valence n; and

RN is a $C_1$—$C_{20}$ organic compound having at least one amine functional group of $pK_a \geqq 7$.

It is recognized that, particularly when the composition contains tetrahedral framework aluminum, a fraction of the amine functional groups may be protonated. The double protonated form, in conventional notation, would be $(RNH)_2O$ and is equivalent in stoichiometry to 2 $RN+H_2O$.

The characteristic X-ray diffraction pattern of the synthetic zeolite ZSM-48 has the following significant lines:

Characteristic lines of ZSM-48

| d (Angstroms)* | Relative intensity |
|---|---|
| 11.9 | W—S |
| 10.2 | W |
| 7.2 | W |
| 5.9 | W |
| 4.2 | VS |
| 3.9 | VS |
| 3.6 | W |
| 2.85 | W |

(* 1 Angstrom=$10^{-10}$m)

These values were determined by standard techniques. The radiation was the K-alpha doublet of copper, and a scintillation counter spectrometer with a strip chart pen recorder was used. The peak heights, I, and the positions as a function of 2 times theta, where theta is the Bragg angle, were read from the spectrometer chart. From these, the relative intensities, 100 $I/I_o$, where $I_o$ is the intensity of the strongest line or peak, and d (obs.), the interplanar spacing in angstroms, corresponding to the recorded lines, were calculated. In the foregoing table the relative intensities are given in terms of the symbols W=weak, VS=very strong and W—S=weak-to-strong. Ion exchange of the sodium ion with cations reveals substantially the same pattern with some minor shifts in interplanar spacing and variation in relative intensity. Other minor variations can occur depending on the silicon to aluminum ratio of the particular sample, as well as if it has been subjected to thermal treatment.

The ZSM-48 can be prepared from a reaction mixture containing a source of silica, water, RN, an alkali metal oxide (e.g. sodium) and optionally alumina. The reaction mixture should have a composition, in terms of mole ratios of oxides, falling within the following ranges:

| Reactants | | Broad | Preferred |
|---|---|---|---|
| $Al_2O_3/SiO_2$ | = | 0 to 0.02 | 0 to 0.01 |
| $Na/SiO_2$ | = | 0 to 2 | 0.1 to 1.0 |
| $RN/SiO_2$ | = | 0.01 to 2.0 | 0.05 to 1.0 |
| $OH^-/SiO_2$ | = | 0 to 0.25 | 0 to 0.1 |
| $H_2O/SiO_2$ | = | 10 to 100 | 20 to 70 |
| $H^+$(added)$SiO_2$ | = | 0 to 0.2 | 0 to 0.05 |

wherein RN is a $C_1$—$C_{20}$ organic compound having amine functional group of $pK_a \geqq 7$. The mixture is maintained at 80—250°C until crystals of the material are formed. $H^+$(added) is moles acid added in excess of the moles of hydroxide added. In calculating $H^+$(added) and OH values, the term acid ($H^+$) includes both hydronium ion, whether free or coordinated, and aluminum. This aluminum sulfate, for example, would be considered a mixture of aluminum oxide, sulfuric acid, and water. An amine hydrochloride would be a mixture of amine and HCl. In preparing the highly siliceous form of ZSM-48 no alumina is added. Thus, the only aluminum present occurs as an impurity in the reactants.

Preferably, crystallization is carried out under pressure in an autoclave or static bomb reactor, at 80°C to 250°C. Thereafter, the crystals are separated from the liquid and recovered. The composition can be prepared utilizing materials which supply the appropriate oxide. Such compositions include sodium silicate, silica hydrosol, silica gel, silicic acid, RN, sodium hydroxide, sodium chloride, aluminum sulfate, sodium aluminate, aluminum oxide, or aluminum itself. RN is a $C_1$—$C_{20}$ organic compound containing at least one amine functional group of $pK_a \geqq 7$, as defined above, and includes such compounds as $C_3$—$C_{18}$ primary, secondary, and tertiary amines, cyclic amine (such as piperidine, pyrrolidine and piperazine), and polyamines such as $NH_2$—$C_nH_{2n}$—$NH_2$ wherein n is 4—12.

The original cations can be subsequently replaced, at least in part, by calcination and/or ion exchange with another cation. Thus, the original cations are exchanged into a hydrogen or hydrogen ion precursor form or a form in which the original cation has been replaced by a metal of Groups II through VIII of the Periodic Table. Thus, for example, it is contemplated to exchange the original cations with ammonium ions or with hydronium ions. Catalytically active forms of these would include, in particular, hydrogen, rare earth metals, aluminum, manganese and other metals of Groups II and VIII of the Periodic Table.

It is to be understood that it is intended that identification of the above-mentioned crystalline zeolites is to be resolved on the basis of their respective X-ray diffraction patterns. The present invention contemplates utilization of such catalysts wherein the mole ratio of silica to alumina is essentially unbounded. Mention of the above-identified patents should therefore not be construed as limiting the disclosed crystalline zeolites to those having the specific silica-alumina mole ratios discussed therein, it now being known that such zeolites may be substantially aluminum-free and yet, having the same crystal structure as the disclosed materials, may be useful or even preferred in some applications. It is the crystal structure, as identified by the X-ray diffraction "fingerprint", which establishes the identity of the specific crystalline zeolite material.

The specific zeolites described, when prepared in the presence of organic cations, are substantially catalytically inactive, possibly because the intra-crystalline free space is occupied by organic cations from the forming solution. They may be activated by heating in an inert atmosphere at 540°C for one hour, for example, followed by base exchange with ammonium salts followed by calcination at 540°C in air. The presence of organic cations in the forming solution may not be absolutely essential to the formation of this type zeolite; however, the presence of these cations does appear to favor the formation of this special class of zeolite. More generally, it is desirable to activate this type catalyst by base exchange with ammonium salts followed by calcination in air at about 540°C for from about 15 minutes to about 24 hours.

Natural zeolites may sometimes be converted to zeolite structures of the class herein identified by various activation procedures and other treatments such as base exchange, steaming, alumina extraction and calcination, alone or in combinations. Natural minerals which may be so treated include ferrierite, brewsterite, stilbite, dachiardite, epistilbite, heulandite, and clinoptilolite.

The preferred crystalline zeolites for utilization herein include ZSM-5, ZSM-11, ZSM-12, ZSM-23, ZSM-35, ZSM-38 and ZSM-48, with ZSM-5 being particularly preferred.

In a preferred aspect of this invention, the zeolites selected are those providing among other things a crystal framework density, in the dry hydrogen form, of not less than about 1.6 grams per cubic centimeter. It has been found that zeolites which satisfy all three of the discussed criteria are most desired for several reasons. Therefore, the preferred zeolites useful with respect to this invention are those having a Constraint Index as defined above of about 1 to about 12, a silica to alumina mole ratio of at least about 12 and a dried crystal density of not less than about 1.6 grams per cubic centimeter. The dry density for known structures may be calculated from the number of silicon plus aluminum atoms per 1000 cubic Angstroms (1

Angstrom=$10^{-10}$m), as given, e.g., on Page 19 of the article Zeolite Structure by W. M. Meier, Proceedings of the Conference on Molecular Sieves, (London, April 1967) published by the Society of Chemical Industry, London, 1968.

When the crystal structure is unknown, the crystal framework density may be determined by classical pycnometer techniques. For example, it may be determined by immersing the dry hydrogen form of the zeolite in an organic solvent which is not sorbed by the crystal. Or, the crystal density may be determined by mercury porosimetry, since mercury will fill the interstices between crystals but will not penetrate the intracrystalline free space.

It is possible that the unusual sustained activity and stability of this special class of zeolites is associated with its high crystal anionic framework density of not less than about 1.6 grams per cubic centimeter. This high density must necessarily be associated with a relatively small amount of free space within the crystal, which might be expected to result in more stable structures. This free space, however, is important as the locus of catalytic activity.

Crystal framework densities of some typical zeolites, including some which are not within the purview of this invention, are:

| | Void volume | Framework density |
|---|---|---|
| Ferrierite | 0.28 cc/cc | 1.76 g/cc |
| Mordenite | .28 | 1.7 |
| ZSM-5, -11 | .29 | 1.79 |
| ZSM-12 | — | 1.8 |
| ZSM-23 | — | 2.0 |
| Dachiardite | .32 | 1.72 |
| L | .32 | 1.61 |
| Clinoptilolite | .34 | 1.71 |
| Laumontite | .34 | 1.77 |
| ZSM-4 (Omega) | .38 | 1.65 |
| Heulandite | .39 | 1.69 |
| P | .41 | 1.57 |
| Offretite | .40 | 1.55 |
| Levynite | .40 | 1.54 |
| Erionite | .35 | 1.51 |
| Gmelinite | .44 | 1.46 |
| Chabazite | .47 | 1.45 |
| A | .5 | 1.3 |
| Y | .48 | 1.27 |

When synthesized in the alkali metal form, the zeolite is conveniently converted to the hydrogen form, generally by intermediate formation of the ammonium form as a result of ammonium ion exchange and calcination of the ammonium form to yield the hydrogen form. In addition to the hydrogen form, other forms of the zeolite wherein the original alkali metal has been reduced to less than about 1.5 percent by weight may be used. Thus, the original alkali metal of the zeolite may be replaced by ion exchange with other suitable metal cations of Groups I through VIII of the Periodic Table, including, by way of example, nickel, copper, zinc, palladium, calcium or rare earth metals.

It may be useful to incorporate the above-described crystalline zeolite with a matrix comprising

another material resistant to the temperature and other conditions employed in the process. Such matrix material is useful as a binder and imparts greater resistance to the catalyst.

Useful matrix materials include both synthetic and naturally occurring substances, as well as inorganic materials such as clay, silica and/or metal oxides. The latter may be either naturally occurring or in the form of gelatinous precipitates or gels including mixtures of silica and metal oxides. Naturally occurring clays which can be composited with the zeolite include those of the montmorillonite and kaolin families, which families include the sub-bentonites and the kaolins commonly known as Dixie, McNamee-Georgia and Florida clays or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, the zeolites employed herein may be composited with a porous matrix material, such as alumina, silica-alumina, silica-magnesia, silica-zirconia, silica-thoria, silica-beryllia, and silica-titania, as well as ternary compositions, such as silica-alumina-thoria, silica-alumina-zirconia, silica-alumina-magnesia and silica-magnesia-zirconia. The matrix may be in the form of a cogel. The relative proportions of zeolite component and inorganic oxide gel matrix, on an anhydrous basis, may vary widely with the zeolite content ranging from 1 to 99 percent by weight and more usually, from 5 to 80 percent by weight of the dry composite.

In the process of this invention the zeolite catalyst used is conditioned by being contacted with a light olefin or olefin mixture before the olefins to be converted to lube stock are contacted therewith. Preferably, the conditioning olefin is one or a mixture of olefins having an average of from 3 to 6 carbon atoms per molecule but it can be a mixture of olefins ranging from 2 to 16 in average number of carbon atoms per molecule. The most preferred olefin is propylene. The zeolite catalyst is contacted with this gaseous olefin at temperatures ranging from 204 to 538°C (400 to 1000°F) and preferably from 232° to 482°C (450°F to 900°F) at a pressure of from 101 to 791 kPa (0 to 100 psig). The contacting is preferably carried out for a time period of from 1 to 70 hours. Subsequent to this conditioning step for the zeolite, a gaseous paraffinic feed containing a high percentage of an olefin such as propylene is contacted with the conditioned ZSM-5 type crystalline zeolite catalyst in the reaction zone which preferably is a fixed bed. In a typical embodiment of the process of this invention the stream olefin feedstock, preferably one of a high propylene content is introduced into the reaction zone at a temperature of from 177°C to 343°C (350°F to 650°F), a pressure from 791 to 34575 kPa (100 to 5000 psig) and a WHSV of 0.1 to 10. The olefin feedstock can be a mixture of olefins having an average number of carbon atoms per molecule of 2 to 16. Preferably one having an average number of carbon atoms per molecule of 3 to 6. The most preferred feedstock is propylene.

Preferred conditions for this operation are a temperature of 204°C to 316°C (400 to 600°F), a pressure of 2859 to 13890 kPa (400 to 2000 psig), and a WHSV of 0.2 to 1. The effluent from this reaction zone is then separated and is fractionated to recover the desired lubricating oil base stock which preferably will have a boiling point of above 316°C (600°F). The gaseous overhead from this operation can be recycled to the process for conversion to the higher boiling point hydrocarbon material. Ordinarily, it will be desirable to subject the lubricating fraction to a conventional hydrogenation step to stabilize the fraction. This is done using any conventional hydrogenation catalyst such as nickel on kieselguhr at temperature ranging from 149° to 427°C (300 to 800°F) and pressure of 791 and 6996 kPa (100 to 1000 psig).

The following Example illustrates the present invention.

Example

A 40/1 $SiO_2/Al_2O_3$ acid form ZSM-5 extrudate (65% ZSM-5, 35% alumina binder by weight) was conditioned with 1-hexene at 232°C (450°F), 0.5 WHSV, and 308 kPa (30 psig) for 3 hours. Propylene was then processed over the catalyst at 204 to 232°C (400—450°F), 0.5 WHSV, 10443 kPa (1500 psig) for 4 days. An identical run was made on a portion of the catalyst which had not been conditioned. The 343°C (650°F) products so produced compare as follows:

| Catalyst | No conditioning | Conditioned with 1-hexene 232°C, 308 kPa, 3 hours (450°F, 30 psig, 3 hours) |
|---|---|---|
| 343°C+ Lube Yield, wt.% (650°F+ Lube Yield, wt.%) | 23 | 22 |
| Gravity, °API | 36.2 | 36.4 |
| Specific | 0.8438 | 0.8428 |
| Pour Point, °C(°F) | −46 (−50) | −51 (−60) |
| KV @ 40°C, cs | 38.87 | 28.27 |
| KV @ 100°C, cs | 5.68 | 4.81 |
| Viscosity Index | 78 | 84 |

Two additional runs were made in which the catalyst was conditioned with propylene at 482°C (900°F), 0.5 WHSV, 308 kPa (30 psig), for 3 and 16 hours. Propylene was then flowed over the catalyst at 204 to 260°C (400 to 500°F), 0.5 WHSV, 10443 kPa (1500 psig) for periods of 4—6 days. The resultant products had the following properties:

| Catalyst | No conditioning | Conditioned with $C_3$=at 482°C, 308 kPa ($C_3$=at 900°F, 30 psig) 3 hours | 16 hours |
|---|---|---|---|
| 343°C (650°F) Lube, wt.% | 23 | 18 | 4 |
| Gravity, °API | 36.2 | 37.3 | 37.5 |
| Specific | 0.8438 | 0.8383 | 0.8373 |
| Pour Point, °C(°F) | −46 (−50) | −48 (−55) | −40 (−40) |
| KV @ 40°C, $mm^2/s$ | 38.87 | 26.33 | 20.87 |
| KV @ 100°C, $mm^2/s$ | 5.68 | 4.63 | 4.17 |
| Viscosity Index | 78 | 86 | 101 |

The 16 hour conditioning run shows that very high V.I.'s can be obtained, but at the expense of yield. The degree of conditioning can thus be adjusted to obtain the desired V.I.-yield relationship. In commercial practice, the charge olefin would be most conveniently used for the conditioning step, this being propylene in the above case. For the conditioning step, the broad range of $C_2$—$C_{16}$ olefins can be charged at 204 to 538°C (400 to 1000°F), 101 to 791 kPa (0 to 100 psig), 0.1 to 5 WHSV, for periods of 1—70 hours. As an alternative, the olefin can be charged at lube-producing conditions for 1 to 10 days, then the catalyst "soaked" at reaction temperature, 101 to 791 kPa (0 to 100 psig) for a period of time.

**Claims**

1. A process for converting an olefinic stream containing light olefins having an average number of carbon atoms per molecule of 2 to 16 to a lubricating oil stock comprising:

(a) subjecting a crystalline zeolite ZSM-5 type catalyst to a preconditioning treatment by passing a light olefin or olefin mixture over the catalyst at a temperature from 204 to 538°C (400 to 1000°F) a pressure from 101 to 791 kPa (0 to 100 psig) and a weight hourly space velocity of from 0.1 to 5;
(b) thereafter passing an olefin feedstock comprising olefins having an average number of carbon atoms per molecule of 2 to 16 over the treated catalyst;
(c) collecting the effluent stream therefrom;
(d) fractionating the effluent stream into a high boiling point lubricating oil fraction; and
(e) hydrogenating the lubricating oil fraction.

2. The process of Claim 1 wherein the crystalline zeolite is ZSM-5, ZSM-11, ZSM-12, ZSM-23, ZSM-35, ZSM-38, or ZSM-48.
3. The process of Claim 1 or 2 wherein the zeolite is an acid form.
4. The process of Claim 3 wherein the zeolite is an HZSM-5 zeolite.
5. The process of any one of Claims 1 to 4 wherein the olefin conversion conditions include a temperature of 177 to 343°C (350 to 650°F), a pressure of 791 to 34575 kPa (100 to 5000 psig), and a WHSV of from 0.1 to 10.
6. The process of any one of Claims 1 to 5 wherein the olefin or olefin mixture used for the catalyst preconditioning treatment has an average number of carbon atoms of from 3 to 6.

**Patentansprüche**

1. Verfahren zur Umwandlung eines olefinischen Stromes, der leichte Olefine mit einer Durchschnittszahl an Kohlenstoffatomen pro Molekül von 2 bis 16 enthält, zu einem Schmierölmaterial, welches umfaßt:

a) Unterziehen eines kristallinen Zeolithkatalysators vom ZSM-5 Typ einer Vorbehandlung durch Leiten eines leichten Olefins oder einer Olefinmischung über den Katalysator bei einer Temperatur

von 204 bis 538°C (400 bis 1000°F), einem Druck von 101 bis 791 kPa (0 bis 100 psig) und einer stündlichen Gewichts-Raum-Geschwindigkeit von 0,1 bis 5;

b) daran anschließendes Leiten eines olefinischen Ausgangsmaterials, das Olefine mit einer Durchschnittszahl an Kohlenstoffatomen pro Molekül von 2 bis 16 umfaßt, über den behandelten Katalysator;

c) Auffangen des Abflußstromes daraus;

d) Fraktionieren des Abflußstromes in eine Schmierölfraktion mit hohem Siedepunkt und

e) Hydrierung der Schmierölfraktion.

2. Verfahren nach Anspruch 1, worin der kristalline Zeolith ZSM-5, ZSM-11, ZSM-12, ZSM-23, ZSM-35, ZSM-38 oder ZSM-48 ist.

3. Verfahren nach Anspruch 1 oder 2, worin der Zeolith eine saure Form ist.

4. Verfahren nach Anspruch 3, worin der Zeolith ein Zeolith HZSM-5 ist.

5. Verfahren nach einem der Ansprüche 1 bis 4, worin die Bedingungen der Olefinumwandlung eine Temperatur von 177 bis 343°C (350 bis 650°F), einen Druck von 791 bis 34575 kPa (100 bis 5000 psig) und eine WHSV von 0,1 bis 10 umfassen.

6. Verfahren nach einem der Ansprüche 1 bis 5, worin das Olefin oder die Olefinmischung, die für die Vorbehandlung des Katalysators verwendet werden, eine Durchschnittszahl an Kohlenstoffatomen von 3 bis 6 haben.

**Revendications**

1. Un procédé de conversion d'un courant d'oléfins contenant des oléfines légrès dont le nombre moyen d'atomes de carbone par molécule est compris entre 2 et 16, en une charge d'huile lubrifiante consistant à:

(a) soumettre un catalyseur de type zéolitique cristalline ZSM-5 à un traitement de préconditionnement en faisant passer sur le catalyseur une oléfine légère ou un mélange d'oléfines à une température de 204 à 538°C (400° à 1000°F), une pression de 101 kPa à 791 kPa (0 à 100 psig) et une vitesse spatiale horaire pondérale de 0,1 à 5;

(b) faire passer ensuite une charge d'oléfines comprenant des oléfines dont le nombre moyen d'atomes de carbone par molécule est compris entre 2 et 16 sur le catalyseur traité;

(c) recueillir le courant effluent résultant;

(d) fractionner le courant effluent en une fraction d'huile lubrifiante à point d'èbullition élevé; et

(e) hydrogéner la fraction d'huile lubrifiante.

2. Le procédé selon la revendication 1, dans lequel la zéolite cristalline est la ZSM-5, ZSM-11, ZSM-12, ZSM-23, ZSM-35, ZSM-38 ou la ZSM-48.

3. Le procédé selon la revendication 1 ou 2, dans lequel la zéolite se trouve sous sa forme acide.

4. Le procédé selon la revendication 3, dans lequel la zéolite est une zéolite HZSM-5.

5. Le procédé selon l'une quelconque des revendications 1 à 4, dans lequel les conditions de conversion de l'oléfine comprennent une température de 177°C à 343°C (350 à 650°F), une pression de 791 à 34 575 kPa (100 à 5000 psig) et une VSHP de 0,1 à 10.

6. Le procédé selon l'une quelconque des revendications 1 à 5, dans lequel l'oléfine ou le mélange d'oléfines utilisé(e) pour le traitement de préconditionnement du catalyseur présente un nombre moyen d'atomes de carbone compris entre 3 et 6.